# EUROPEAN PATENT APPLICATION

(11) **EP 2 924 307 A2**
(43) Date of publication of application: **30.09.2015**
(21) Application number: 15160374.3
(22) Date of filing: 23.03.2015
(51) Int. Cl.: F16D 3/38

(54) **Universal joint assembly method and universal joint assembly apparatus**

(30) Priority: 28.03.2014 JP 2014069313
(71) Applicant: JTEKT CORPORATION, Osaka-shi Osaka 542-8502 (JP)
(72) Inventor: Kobayashi, Masanori, Osaka-shi, Osaka, 542-8502 (JP); Koyama, Takeshi, Osaka-shi, Osaka, 542-8502 (JP); Nezu, Toshihiro, Osaka-shi, Osaka, 542-8502 (JP)
(74) Representative: Winter, Brandl, Fürniss, Hübner, Röss, Kaiser, Polte - Partnerschaft mbB

(57) **Abstract**

A universal joint includes: a pair of yokes each including a pair of arms in each of which a bearing hole is formed; four bearings each including a bearing cup press-fitted into the bearing hole and a plurality of needle rollers; and a joint spider including four shafts respectively supported by the bearings. A clinched portion that hinders the bearing cup from slipping out of the bearing hole is formed at the peripheral edge of the bearing hole. In the universal joint, the clinching amount for forming the clinched portion is set in accordance with a radial clearance, which is formed between the shaft of the joint spider and the needle rollers, to adjust the size of the radial clearance.

## Description

### BACKGROUND OF THE INVENTION

### 1. Field of the Invention

The present invention relates to an assembly method and an assembly apparatus for a universal joint including a pair of yokes, a plurality of bearings, and a joint spider.

### 2. Description of the Related Art

In a steering device, a universal joint is used to connect an intermediate shaft and a pinion shaft to each other, for example. Japanese Patent No. 4739119 describes an example of the universal joint. The universal joint includes a first yoke, a second yoke, a joint spider, and four bearings. The first yoke is connected to the intermediate shaft. The second yoke is connected to the pinion shaft. The joint spider connects the pair of yokes to each other. The bearings support respective shafts of the joint spider.

The bearings each include a bearing cup and a plurality of rolling elements. The bearing cup is press-fitted into a bearing hole formed in an arm of the yoke. The rolling elements are disposed at the inner periphery of the bearing cup. Each of the shafts of the joint spider is inserted into the corresponding bearing cup. In the arm of the yoke into which the bearing is press-fitted, clinched portions that restrict movement of the joint spider such that the shaft of the joint spider will not slip out of the bearing are formed at the peripheral edge of the bearing hole.

A radial clearance, which is formed between the shaft of the joint spider and the rolling elements of the bearing, is one of the main factors that affect operation of the universal joint. Therefore, when manufacturing the universal joint, a combination of the first yoke, the second yoke, the joint spider, and the bearings is selected such that the radial clearance falls within a tolerance. However, it takes some effort to make the selection, which leaves room for improvement in terms of the productivity.

### SUMMARY OF THE INVENTION

It is an object of the present invention to provide an assembly method and an assembly apparatus for a universal joint that contribute to simplifying the work of adjusting a radial clearance formed between a shaft of a joint spider and rolling elements of a bearing.

An aspect of the present invention provides a universal joint assembly method for assembling a universal joint that includes: a pair of yokes each including a pair of arms in each of which a bearing hole is formed; four bearings each including a bearing cup press-fitted into the bearing hole and a plurality of rolling elements disposed at an inner periphery of the bearing cup; and a joint spider including four shafts respectively supported by the four bearings. The bearing hole is provided with a clinched portion that hinders the bearing cup from slipping out of the bearing hole. The universal joint assembly method includes forming the clinched portion at a peripheral edge of the bearing hole. In the universal joint assembly method, a clinching amount, by which the peripheral edge of the bearing hole is deformed in an axial direction of the bearing hole when forming the clinched portion, is set in accordance with a radial clearance, which is formed between the shaft of the joint spider and the rolling elements after the bearing cup is press-fitted into the bearing hole and before the clinched portion is formed, to adjust a size of the radial clearance after the clinched portion is formed.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a sectional view of a universal joint according to an embodiment;
FIG. 2 is a sectional view illustrating a part of FIG. 1 as enlarged;
FIG. 3 is a side view of a yoke according to the embodiment;
FIG. 4 is a block diagram illustrating the configuration of an assembly apparatus;
FIG. 5 is a sectional view of the universal joint in a first press-fitting process;
FIG. 6 is a sectional view of the universal joint after the first press-fitting process;
FIG. 7 is a sectional view of the universal joint in a first clinching process;
FIG. 8 is a flowchart illustrating a clinching amount computation method executed by a control unit 70;
FIG. 9 is a material hardness determination map used to compute a clinching amount;
FIG. 10 is a clearance-load map used to compute the clinching amount;
FIG. 11 is a clinching amount determination map used to compute the clinching amount; and
FIG. 12 is a clearance-friction torque map used to compute a clinching amount according to a modification.

### DETAILED DESCRIPTION OF EMBODIMENTS

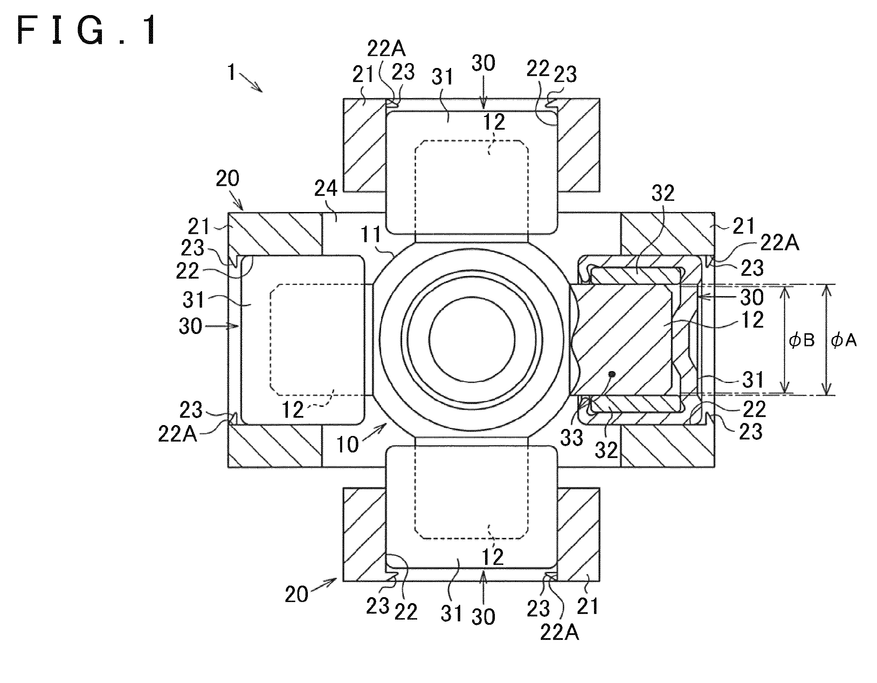

The configuration of a universal joint 1 will be described with reference to FIG. 1. The universal joint 1 is used to couple an intermediate shaft and a pinion shaft (neither of which is illustrated) of a steering device to each other, for example. The universal joint 1 includes a joint spider 10, two yokes 20, and four bearings 30.

The joint spider 10 includes a body portion 11 and four shafts 12. The four shafts 12 project from the body portion 11. The four shafts 12 are equally disposed at 90° in the circumferential direction of the body portion 11. The distal-end portions of the shafts 12 are chamfered.

The two yokes 20 are coupled to each other by the joint spider 10 and the four bearings 30. The yokes 20 each include a pair of arms 21 and a fixation portion 24. The arms 21 are each provided with a bearing hole 22. Two of the shafts 12 spaced at 180° from each other are inserted into the bearing holes 22 in the arms 21 of one of the yokes 20. The remaining shafts 12 are inserted into the bearing holes 22 in the arms 21 of the other yoke 20.

The four bearings 30 are each a shell-type needle roller bearing having one tightly sealed end. The bearings 30, the shafts 12, and the bearing holes 22 are coaxial with each other. The bearings 30 each include a bearing cup 31 and a plurality of needle rollers 32 which serve as the plurality of rolling elements.

The bearing cup 31 is press-fitted into the bearing hole 22. The bearing cup 31 houses the plurality of needle rollers 32. The plurality of needle rollers 32 are disposed in an annular arrangement at the inner periphery of the bearing cup 31 so as to be coaxial with the center axis, forming an internal space 33. The shaft 12 is inserted into the internal space 33. The plurality of needle rollers 32 and the shaft 12 are fitted with each other through clearance fit. Grease is applied to the surfaces of the needle rollers 32. A radial clearance X, which is a clearance between the internal space 33 and the shaft 12, is prescribed by the inscribed circle diameter (hereinafter referred to as "inscribed circle diameter φA") of the plurality of needle rollers 32 and the outside diameter (hereinafter referred to as "shaft diameter φB") of the shaft 12.

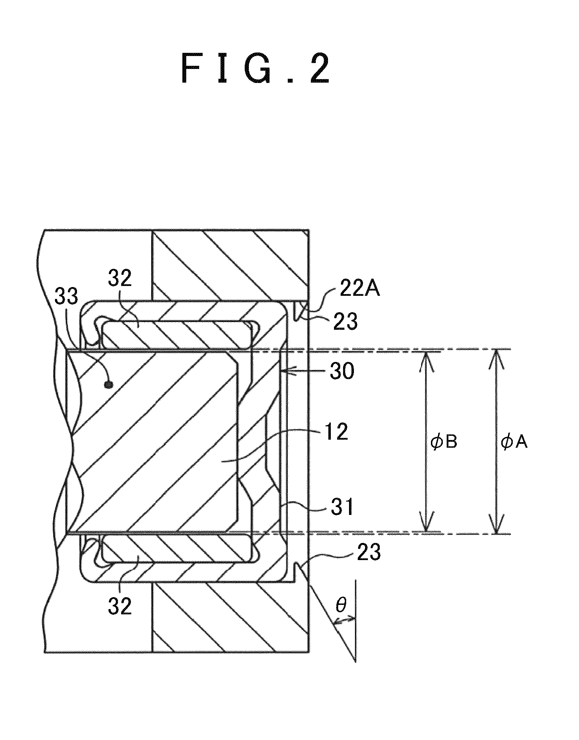

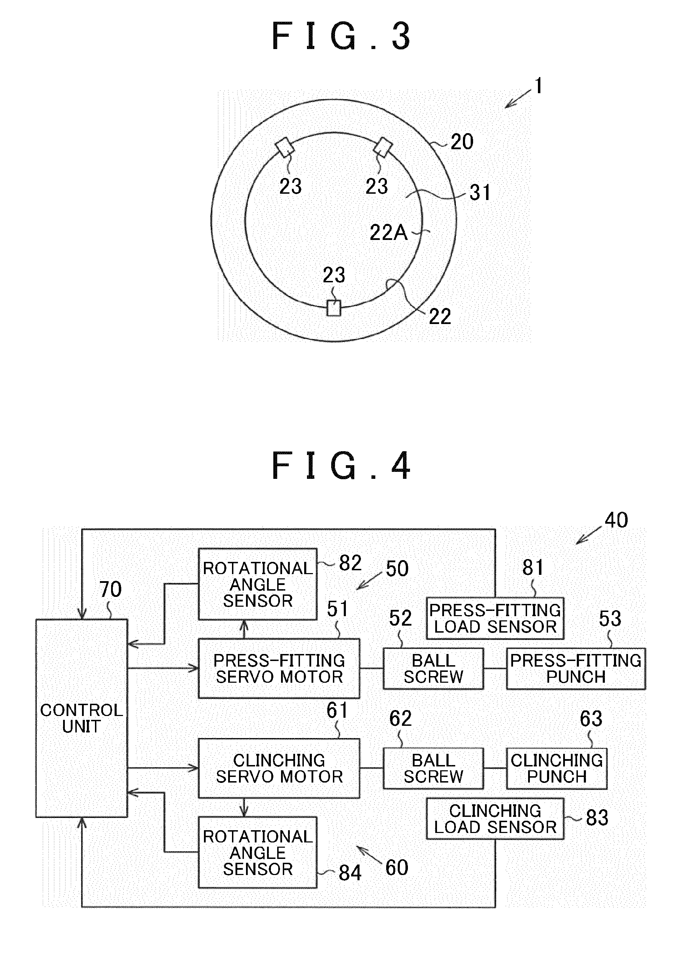

As illustrated in FIG. 2, clinched portions 23 that hinder the bearing cup 31 from slipping out of the bearing hole 22 are formed at a peripheral edge 22A of an opening of the bearing hole 22 on the side opposite from the side of insertion of the joint spider 10. An inclination angle θ of the clinched portion 23 is set in the range of 5 to 30 degrees. As illustrated in FIG. 3, three clinched portions 23 are formed at the peripheral edge 22A. The three clinched portions 23 are arranged at irregular intervals at the peripheral edge 22A.

The configuration of an assembly apparatus 40 that assembles the universal joint 1 will be described with reference to FIG. 4.

The assembly apparatus 40 includes a press-fitting device 50, a clinching device 60, a control unit 70, and various sensors. The various sensors include a press-fitting load sensor 81, a rotational angle sensor 82, a clinching load sensor 83, and a rotational angle sensor 84. The control unit 70 corresponds to the "adjustment unit".

The press-fitting device 50 includes a press-fitting servo motor 51, a ball screw 52, and a press-fitting punch 53. The press-fitting servo motor 51 is connected to the press-fitting punch 53 via the ball screw 52. Therefore, rotation from the press-fitting servo motor 51 is converted into linear motion through the ball screw 52 to move the press-fitting punch 53 in a linear direction.

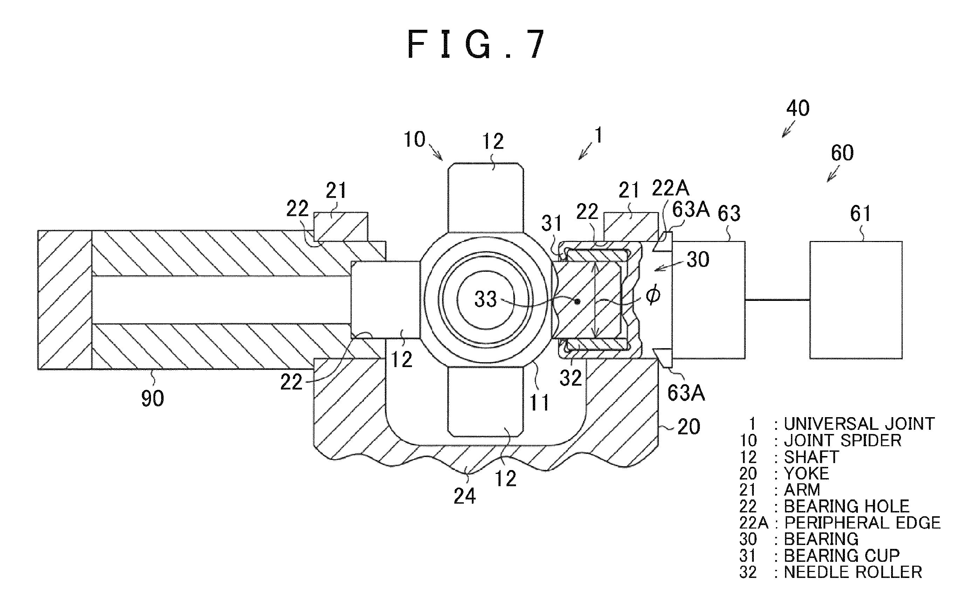

The clinching device 60 includes a clinching servo motor 61, a ball screw 62, and a clinching punch 63. The clinching servo motor 61 is connected to the clinching punch 63 via the ball screw 62. Therefore, rotation from the clinching servo motor 61 is converted into linear motion through the ball screw 62 to move the clinching punch 63 in a linear direction. The inclination angle of a contact portion 63A (see FIG. 7) of the clinching punch 63 that contacts the clinched portion 23 (see FIG. 2) is set in the range of 5 to 30 degrees.

The press-fitting load sensor 81 measures a press-fitting load at the time when the bearing cup 31 is press-fitted into the bearing hole 22 by the press-fitting punch 53. The press-fitting load sensor 81 outputs a value that corresponds to the drive voltage of the press-fitting servo motor 61 to the control unit 70. The control unit 70 computes a measured press-fitting load applied to the press-fitting punch 53 on the basis of the output of the press-fitting load sensor 81. The rotational angle sensor 82 outputs a value that corresponds to the rotational angle of the press-fitting servo motor 51 to the control unit 70. The control unit 70 computes the amount of movement of the press-fitting punch 53 on the basis of the output of the rotational angle sensor 82.

The clinching load sensor 83 measures a clinching load applied when the clinched portions 23 are formed by the clinching punch 63. The clinching load sensor 83 outputs a value that corresponds to the drive voltage of the clinching servo motor 61 to the control unit 70. The control unit 70 computes a clinching load applied to the clinching punch 63 on the basis of the output of the clinching load sensor 83. The rotational angle sensor 84 outputs a value that corresponds to the rotational angle of the clinching servo motor 61 to the control unit 70. The control unit 70 computes a clinching amount D, which is the amount of movement of the clinching punch 63, on the basis of the output of the rotational angle sensor 84. The clinching amount D corresponds to the amount by which the peripheral edge 22A of the bearing hole 22 is deformed in the axial direction of the bearing hole 22.

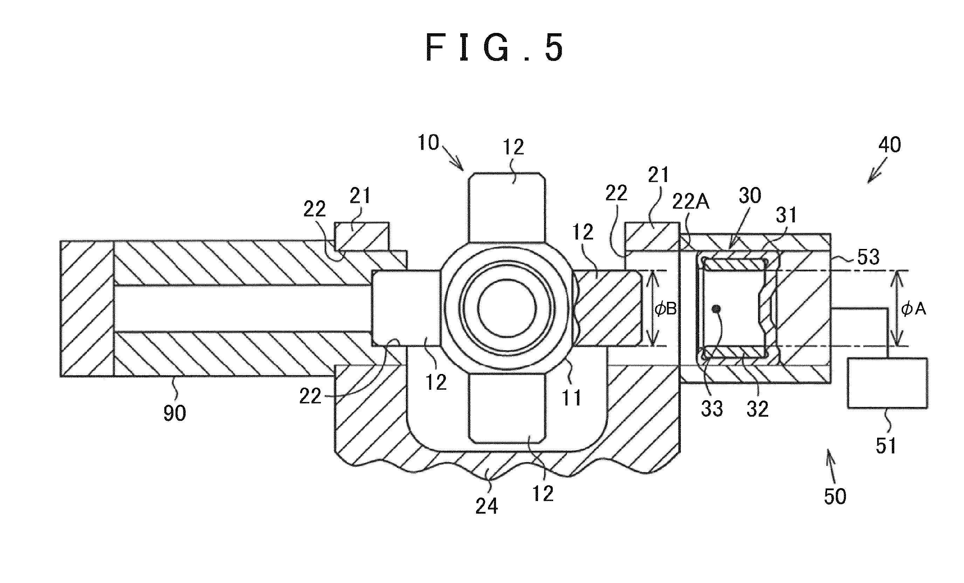

An assembly process for the universal joint 1 through use of the assembly apparatus 40 will be described with reference to FIGS. 5 to 8. The assembly process for the universal joint 1 includes a first press-fitting process, a first clinching process, a second press-fitting process, and a second clinching process.

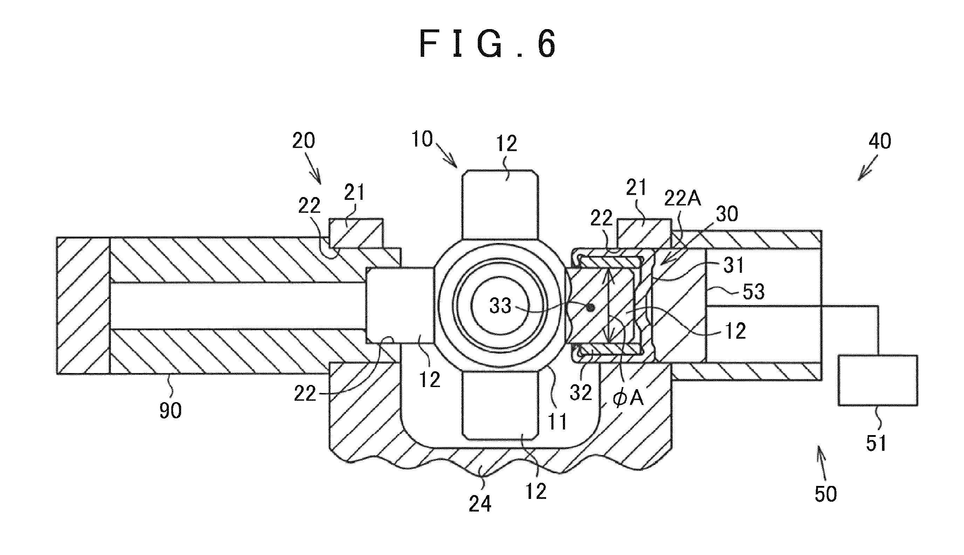

In the first press-fitting process, as illustrated in FIG. 5, one bearing 30 is press-fitted into one bearing hole 22. Specifically, the shaft 12 and the bearing hole 22, which are on the opposite side of the body portion 11 from the one shaft 12 into which the bearing 30 is to be press-fitted, are held by a jig 90. Then, the shaft 12, which is on the opposite side of the body portion 11 from the bearing hole 22 held by the jig 90, is disposed inside the bearing hole 22 corresponding to the shaft 12. Then, the press-fitting servo motor 51 is driven to press-fit the bearing cup 31 of the bearing 30 into the bearing hole 22 via the press-fitting punch 53. Consequently, the bearing cup 31 is press-fitted into the bearing hole 22 as illustrated in FIG. 6.

In the first clinching process, as illustrated in FIG. 7, the clinching servo motor 61 is driven to cause the clinching punch 63 to contact the peripheral edge 22A of the bearing hole 22 into which the bearing 30 has been press-fitted via the first press-fitting process, and to advance the clinching punch 63 into the bearing hole 22 by the set clinching amount. Consequently, clinched portions 23 are formed at the peripheral edge 22A as illustrated in FIG. 2.

In the second press-fitting process, the jig 90 is detached from the shaft 12 and the bearing hole 22 which have been held by the jig 90, and the same process as the first press-fitting process is performed on the shaft 12 to press-fit the bearing 30 into the bearing hole 22. In the second clinching process, the same process as the first clinching process is performed on the peripheral edge 22A of the bearing hole 22 which has been subjected to the second press-fitting process to form clinched portions 23 at the peripheral edge 22A of the bearing hole 22 into which the bearing 30 has been press-fitted via the second press-fitting process.

Further, the assembly apparatus 40 repeatedly performs the first press-fitting process, the first clinching process, the second press-fitting process, and the second clinching process for the two remaining shafts 12, bearing holes 22, and bearings 30 to complete the assembly process for the universal joint 1.

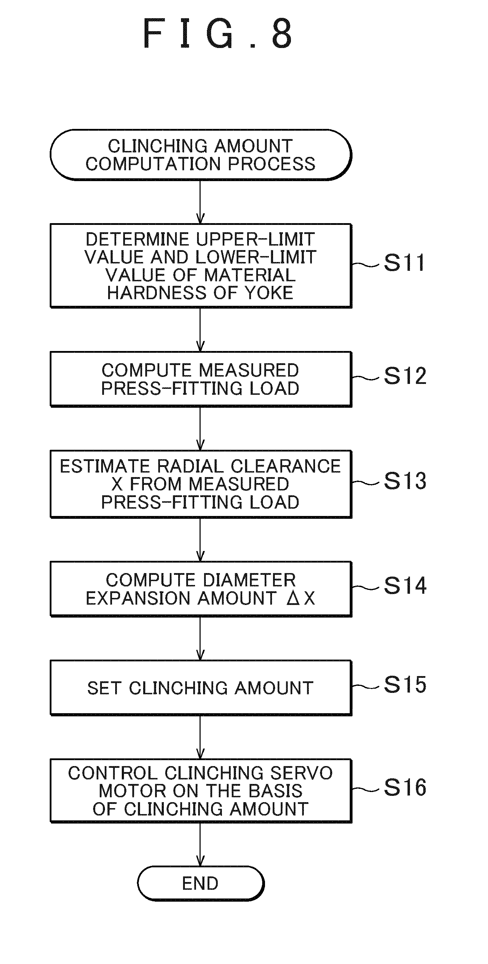

A procedure for computing the clinching amount D in the first clinching process will be described with reference to FIG. 8.

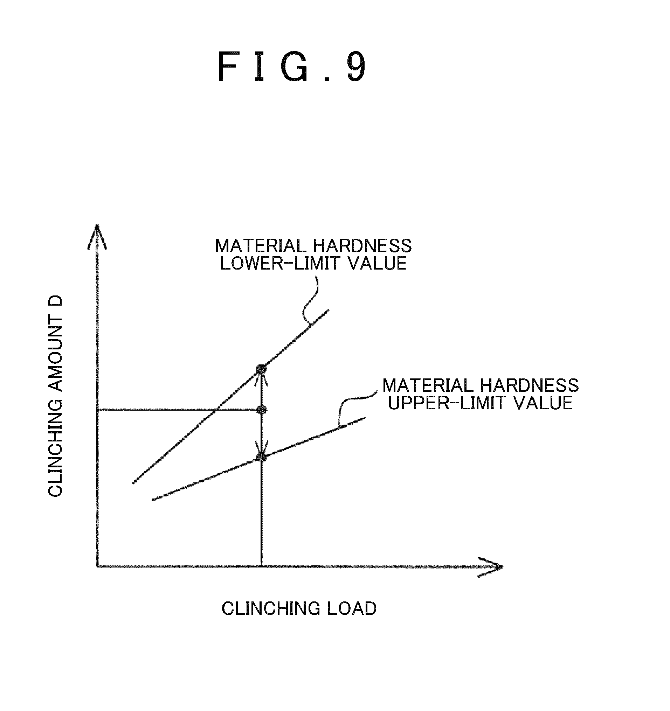

In step S11, the control unit 70 determines the material hardness of the yoke 20. Specifically, the control unit 70 determines the upper-limit value and the lower-limit value of the material hardness of the yoke 20 using the material hardness determination map illustrated in FIG. 9 and the relationship between the clinching amount D and the clinching load. For the relationship between the clinching amount D and the clinching load, the relationship between the clinching amount D and the clinching load in the preceding clinching process for the same universal joint 1 or the clinching amount D and the clinching load used to clinch the yoke 20 of the same lot may be used, for example.

As the material hardness of the yoke 20 is higher, the yoke 20 is more difficult to deform. Therefore, as the material hardness of the yoke 20 is higher, a higher clinching load is required to achieve the desired clinching amount D. Thus, it is estimated that the material hardness of the yoke 20 is higher as the clinching load for the clinching amount D is higher. Therefore, in the material hardness determination map, the material hardness of the yoke 20 becomes higher as the clinching load for the clinching amount D is higher. In addition, the difference between the upper-limit value and the lower-limit value of the material hardness of the yoke 20 becomes larger as the clinching amount and the clinching load are larger. In the initial first clinching process, a reference hardness set in advance is determined as the material hardness.

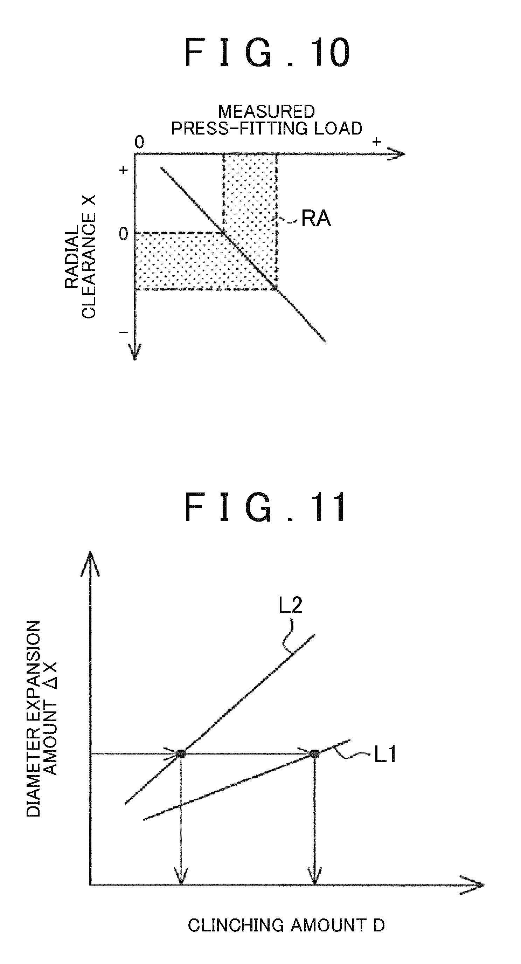

Next, in step S12, the control unit 70 computes a measured press-fitting load during execution of the first press-fitting process. Then, in step S13, a radial clearance X is computed from the measured press-fitting load using the clearance-load map, which corresponds to the clearance-load information, illustrated in FIG. 10. It is estimated that the radial clearance X is smaller as the measured press-fitting load is higher. Therefore, the radial clearance X becomes smaller as the measured press-fitting load is higher in the clearance-load map.

Next, in step S14, the control unit 70 computes a diameter expansion amount ΔX, which is the difference between the radial clearance X computed in step S13 and the tolerance of the radial clearance X set in advance as an adequate value before execution of the clinching process (within a region RA indicated by dots in the clearance-load map of FIG. 10).

Next, in step S15, the control unit 70 sets a clinching amount D using the diameter expansion amount ΔX and the material hardness of the yoke 20. Specifically, as illustrated in FIG. 11, an upper-limit relationship line L1 for the relationship between the clinching amount D and the diameter expansion amount ΔX at the upper-limit value of the material hardness of the yoke 20 determined in step S11 and a lower-limit relationship line L2 for the relationship between the clinching amount D and the diameter expansion amount ΔX at the lower-limit value of the material hardness of the yoke 20 determined in step S11 are placed on a clinching amount map. Then, a range of the clinching amount D corresponding to the diameter expansion amount ΔX is computed from the clinching amount map, and any clinching amount D that falls within the range is set as the final clinching amount D.

In step S14, when the radial clearance X falls between the radial clearance X and the tolerance of the radial clearance X set in advance as an adequate value, the clinching amount D set in advance is not changed but computed as the final clinching amount D.

Next, in step S16, the control unit 70 controls the amount of rotation of the clinching servo motor 61 on the basis of the clinching amount D computed in step S15 to cause the clinching punch 63 to operate, completing the clinching process.

The function of the assembly method for the universal joint 1 will be described. According to the test results obtained by the inventors, the radial clearance X becomes wider as the clinching amount D of the clinching punch 63 becomes larger. The reason for such a relationship between the clinching amount D and the radial clearance X is considered to be as follows. As the clinching punch 63 is advanced into the bearing hole 22, the diameter of the bearing hole 22 is gradually increased from the peripheral edge 22A side of the bearing hole 22. Therefore, a force applied to the bearing cup 31 by a surface of the bearing hole 22 is reduced, which accordingly increases the outside diameter of the bearing cup 31. Therefore, the inscribed circle diameter φA formed by the needle rollers 32 of the bearing 30 is increased, and the radial clearance X becomes wider compared to that before the clinching punch 63 is advanced into the bearing hole 22.

The clinching amount D and the radial clearance X have the relationship described above. By measuring the relationship in advance, the clinching amount D is adjusted when clinched portions 23 are formed by the clinching punch 63. This allows the size of the radial clearance X to be adjusted.

On the other hand, as the press-fitting load at the time when the bearing cup 31 is press-fitted into the bearing hole 22 is larger, the radial clearance X set when press-fitting of the bearing cup 31 is completed becomes larger. Therefore, the relationship between the radial clearance X and the press-fitting load is measured in advance. Therefore, it is possible to determine on the basis of the measured press-fitting load measured when press-fitting the bearing cup 31 whether or not the size of the radial clearance X at the time when press-fitting of the bearing cup 31 is completed is preferable.

For the universal joint 1, the clinching amount D is set in accordance with the measured press-fitting load. Therefore, the size of the radial clearance X is adjusted to an appropriate size as clinched portions 23 are formed by the clinching punch 63.

The assembly method for the universal joint 1 achieves the following functions and effects.
(1) The control unit 70 can adjust the size of the radial clearance X to an appropriate size by changing the clinching amount D. According to the assembly method for the universal joint 1, in addition, it is not necessary to select a combination of a plurality of components unlike the assembly method according to the related art. This contributes to simplifying the work of adjusting the radial clearance X.
(2) In the case where the radial clearance X calculated on the basis of the clearance-load map illustrated in FIG. 10 is narrower than the tolerance, the control unit 70 determines that it is necessary to adjust the radial clearance X such that the radial clearance X falls within the tolerance. In such a case, the diameter expansion amount ΔX, by which it is necessary to widen the radial clearance X such that the radial clearance X falls within the tolerance, is calculated from the relationship between the calculated radial clearance X and the tolerance. A clinching amount D corresponding to the diameter expansion amount ΔX is set on the basis of the relationship between the clinching amount D and the radial clearance X measured in advance. Then, by causing the clinching punch 63 to operate on the basis of the set clinching amount D, a clinched portion 23 is formed at the peripheral edge 22A of the bearing hole 22, and the bearing hole 22 is expanded in diameter such that the radial clearance X falls within the tolerance.
(3) In the case where the radial clearance X set when the bearing cup 31 is press-fitted into the bearing hole 22 already falls within the tolerance without being adjusted through clinching by the clinching punch 63, the control unit 70 sets the clinching amount D to the reference clinching amount D so as to maintain the radial clearance X. This allows the radial clearance X to appropriately fall within the tolerance.
(4) Further, the control unit 70 sets the clinching amount D in consideration of the material hardness of the yoke 20 so that the size of the radial clearance X which is widened through clinching by the clinching punch 63 is managed more appropriately. This allows the radial clearance X to more appropriately fall within the tolerance.
(5) The clinched portion 23 is inclined. Therefore, the amount of expansion of the diameter of the bearing hole 22 produced by clinching with the clinching punch 63 is increased compared to a case where the clinching punch 63 forms clinched portions 23 through flat clinching. Therefore, the clinching amount D which is necessary to adjust the radial clearance X is relatively reduced compared to a method in which flat clinching is used. Therefore, the range of the radial clearance X that may be adjusted through clinching by the clinching punch 63 is widened.
(6) The clinched portions 23 are arranged at irregular intervals at the peripheral edge 22A. Therefore, the peripheral edge 22A is not easily cracked or the like through the clinching process compared to a configuration in which the clinched portions 23 are arranged at regular intervals.

The specific form of the universal joint assembly method according to the present invention is not limited to the form described in relation to the embodiment described above. The universal joint assembly method according to the present invention may take various forms that are different from the embodiment described above to the extent that the object of the present invention is achieved. The following modifications of the embodiment described above are examples of the various forms of the universal joint assembly method according to the present invention.

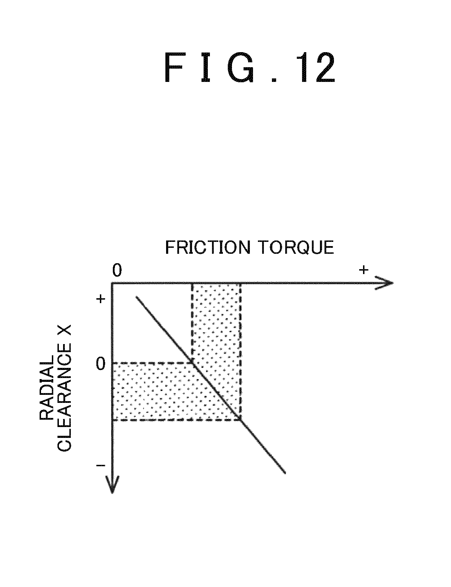

- In step S12 of the clinching amount computation process, friction torque of the bearing 30 after the first press-fitting process may be computed. Then, in step S13, a radial clearance X is computed from the friction torque of the bearing 30 using the clearance-friction torque map, which corresponds to the clearance-friction torque information, illustrated in FIG. 12. It is estimated that the radial clearance X is smaller as the friction torque is larger. Therefore, the radial clearance X becomes smaller as the friction torque is larger in the clearance-friction torque map. The friction torque of the bearing 30 can be measured by rotating the universal joint 1 which has been subjected to the first press-fitting process.

- The clinched portions 23 may be formed by flat clinching.
- The number of clinched portions 23 may be changed to one, two, or four or more.
- The clinched portions 23 may be arranged at regular intervals at the peripheral edge 22A.

- The control unit 70 may not determine the material hardness of the yoke 20.
- In the case where a plurality of universal joints 1 are assembled using materials of the same lot, the control unit 70 may use the clinching amount D used in the assembly process for a universal joint 1 to assemble the other universal joints 1.

- In the assembly process for the universal joint 1, the first press-fitting process and the second press-fitting process may be performed at the same time.
- In the assembly process for the universal joint 1, the first clinching process and the second clinching process may be performed at the same time.

- The press-fitting load sensor 81 may be replaced with a load cell attached to the press-fitting punch 53 to measure the press-fitting load using the load cell.
- The clinching load sensor 83 may be replaced with a load cell attached to the clinching punch 63 to measure the clinching load using the load cell.

- The press-fitting servo motor 51 and the clinching servo motor 61 may be provided as a common servo motor.
- The clinching amount D may be set by an external inspection device. In this case, the measured press-fitting load is output to the external inspection device, and the control unit 70 drives the clinching servo motor 61 so as to achieve the clinching amount D computed by the external inspection device.

- The clinching amount D may be set in accordance with a directly measured radial clearance X. For example, the outside diameter of the shaft 12, the diameter of the bearing hole 22, and the bore diameter of the bearing 30 before assembly of the universal joint 1 are measured, and a radial clearance X obtained when a combination of such values are used is computed.

- The universal joint 1 may be used for a drive shaft in place of a steering shaft. Two universal joints 1 are used as a part of an outer joint and a part of an inner joint of the drive shaft.

The assembly method and assembly apparatus for the universal joint according to the present invention contribute to simplifying the work of adjusting a radial clearance formed between a shaft of a joint spider and rolling elements of a bearing.

## Claims

1. A universal joint assembly method for assembling a universal joint that includes:
a pair of yokes each including a pair of arms in each of which a bearing hole is formed;
four bearings each including a bearing cup press-fitted into the bearing hole and a plurality of rolling elements disposed at an inner periphery of the bearing cup; and
a joint spider including four shafts respectively supported by the four bearings, the bearing hole provided with a clinched portion that hinders the bearing cup from slipping out of the bearing hole, the universal joint assembly method comprising:
forming the clinched portion at a peripheral edge of the bearing hole, wherein a clinching amount, by which the peripheral edge of the bearing hole is deformed in an axial direction of the bearing hole when forming the clinched portion, is set in accordance with a radial clearance, which is formed between the shaft of the joint spider and the rolling elements after the bearing cup is press-fitted into the bearing hole and before the clinched portion is formed, to adjust a size of the radial clearance after the clinched portion is formed.

2. The universal joint assembly method according to claim 1, wherein
a press-fitting load is measured when the bearing cup is press-fitted into the bearing hole, and the clinching amount is set in accordance with the radial clearance estimated on the basis of the measured press-fitting load to adjust the size of the radial clearance.

3. The universal joint assembly method according to claim 2, wherein
the size of the radial clearance corresponding to the measured press-fitting load is calculated with reference to clearance-load information which prescribes a relationship between the press-fitting load at a time when the bearing cup is press-fitted into the bearing hole and the radial clearance, and the clinching amount is set such that the radial clearance falls within a tolerance when the calculated radial clearance is narrower than the tolerance.

4. The universal joint assembly method according to claim 1, wherein
friction torque of the bearing disposed at the shaft of the joint spider is measured, and the clinching amount is set in accordance with the radial clearance estimated on the basis of the measured friction torque of the bearing to adjust the size of the radial clearance.

5. The universal joint assembly method according to claim 4, wherein
the size of the radial clearance corresponding to the measured friction torque of the bearing is calculated with reference to clearance-friction torque information which prescribes a relationship between the friction torque of the bearing and the radial clearance, and the clinching amount is set such that the radial clearance falls within a tolerance when the calculated radial clearance is narrower than the tolerance.

6. The universal joint assembly method according to claim 3 or 5, wherein
the clinching amount is set such that the radial clearance is not varied when the calculated radial clearance falls within the tolerance.

7. The universal joint assembly method according to any one of claims 1 to 6, wherein
the clinching amount is set in accordance with the radial clearance and a hardness of the yokes.

8. The universal joint assembly method according to any one of claims 1 to 7, wherein
an inclination angle of the clinched portion is set in a range of 5 to 30 degrees.

9. A universal joint assembly apparatus for assembling a universal joint that includes:
a pair of yokes each including a pair of arms in each of which a bearing hole is formed;
four bearings each including a bearing cup press-fitted into the bearing hole and a plurality of rolling elements disposed at an inner periphery of the bearing cup; and
a joint spider including four shafts respectively supported by the four bearings, the bearing hole provided, at a peripheral edge thereof, with a clinched portion that hinders the bearing cup from slipping out of the bearing hole, the universal joint assembly apparatus comprising:
a press-fitting device that press-fits the bearing cup into the bearing hole;
a load measurement unit that measures a press-fitting load when the bearing cup is press-fitted into the bearing hole;
a clinching punch that forms the clinched portion; and
an adjustment unit that sets a clinching amount, by which the clinching punch is advanced into the bearing hole, in accordance with the measured press-fitting load, wherein
a size of the radial clearance is adjusted on the basis of the universal joint assembly method according to any one of claim 2, claim 3, claim 6 which depends on claim 3, claim 7 which depends on claim 2, and claim 8 which depends on claim 2.
